# FASCICULE DE BREVET EUROPEEN

(11) **EP 3 587 271 B1**
(45) Date de publication et mention de la délivrance du brevet: **29.07.2020**
(21) Numéro de dépôt: 19182507.4
(22) Date de dépôt: 26.06.2019
(51) Int. Cl.: B64D 25/18, B64C 25/56

(54) **SYSTEME DE FLOTTAISON MUNI D'UNE INTERFACE DE FIXATION ET VEHICULE ASSOCIE**
SCHWIMMSYSTEM, DAS MIT EINER SCHNITTSTELLE ZUR BEFESTIGUNG AUSGESTATTET IST, UND ENTSPRECHENDES FAHRZEUG
FLOTATION SYSTEM PROVIDED WITH AN ATTACHMENT INTERFACE AND ASSOCIATED VEHICLE

(30) Priorité: 26.06.2018 FR 1800660
(43) Date de publication de la demande: 01.01.2020
(73) Titulaire: Airbus Helicopters, 13725 Marignane Cedex (FR); AIRBUS HELICOPTERS DEUTSCHLAND GmbH, 86609 Donauwörth (DE)
(72) Inventeur: GHIRARDI, Nicolas, 13220 CHATEAUNEUF LES MARTIGUES (FR); PELLERIN, Samuel, 86609 DONAUWORTH (DE)
(74) Mandataire: GPI & Associés

(56) Documents cités:
- EP-A1- 2 380 809
- EP-A1- 3 318 435
- GB-A- 2 239 429
- US-A1- 2003 060 101

## Description

La présente invention concerne un système de flottaison muni d'une interface de fixation ainsi qu'un véhicule comprenant un tel système de flottaison.

L'invention appartient donc au domaine technique particulier des systèmes de flottaison pour véhicule.

En particulier, un aéronef peut être équipé d'un système de flottaison de secours.

Un tel système de flottaison d'aéronef peut comprendre un conteneur contenant un flotteur gonflable, une bonbonne de gaz pour gonfler le flotteur ainsi que des ralingues pour relier le flotteur directement ou indirectement à une structure porteuse de l'aéronef.

Dès lors le système de flottaison comporte un nombre relativement important d'organes de fixation. Par exemple, le système de flottaison comporte des organes de fixation pour fixer le conteneur à la structure porteuse, des organes de fixation pour connecter les ralingues, des organes de fixation pour attacher la bonbonne de gaz, des organes de fixation pour assurer une étanchéité à l'eau entre le conteneur et la structure porteuse... La multiplicité des organes de fixation peut compliquer le montage et/ou le démontage du système de flottaison sur le véhicule et/ou compliquer le démontage du système de flottaison notamment à des fins de maintenance.

Selon un exemple, un système de flottaison comporte un berceau qui est muni d'attaches pour être fixé à une structure porteuse. De plus, le berceau porte une bonbonne de gaz. En outre, le berceau est attaché à deux toiles de recouvrement, ces deux toiles de recouvrement étant liées l'une à l'autre par des fils fusibles. Un flotteur plié est alors attaché au berceau par des ralingues et recouvert par les toiles de recouvrement. Lorsque le gaz contenu dans la bonbonne de gaz remplit le flotteur, ce flotteur gonfle et exerce des efforts sur les toiles de recouvrement conduisant à la rupture des fils.

Les systèmes de flottaison des hélicoptères Super Puma ® ou NH90® sont notamment connus.

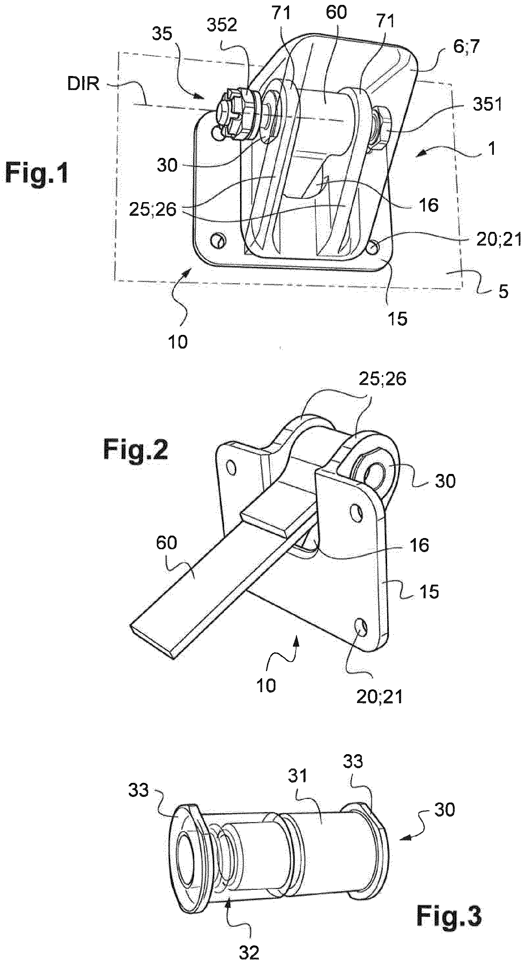

Le document WO/2003/060101 divulgue un système de flottaison (abrégé, fig. 1: 10) comprenant un conteneur (110) pourvu d'une paroi de fond et d'un revêtement (paroi latérale), la paroi de fond s'étendant selon une direction d'une face arrière à une face avant, la face avant et le revêtement délimitant entre eux un espace interne (espace pour 70, 130, 140) vide du conteneur (110), le système de flottaison (10) comprenant au moins un flotteur (130, 140) ayant un volume variable entre une position pliée (fig. 1) et une position déployée (fig. 2).

On connaît également, tels que décrits dans le document EP 2 380 809, des systèmes à absorption d'énergie pour un atterrisseur. De tels systèmes ne sont cependant pas adaptés pour solidariser de manière optimale un conteneur et un flotteur à un aéronef.

De même, les documents WO 03/026959, EP 3 318 435, KR 2002 0039815, FR 2 917 713 et GB 2 239 429 sont aussi connus mais ne décrivent pas un système de flottaison ainsi que sa fixation sur un aéronef.

La présente invention a alors pour objet une interface de fixation innovante afin par exemple d'optimiser la fixation d'un système de flottaison.

L'invention se rapporte donc à un système de flottaison comprenant un conteneur, le conteneur étant pourvu d'une paroi de fond et d'un revêtement, la paroi de fond s'étendant selon une direction d'une face arrière à une face avant, la face avant et le revêtement délimitant entre eux un espace interne vide du conteneur, le système de flottaison comprenant au moins un flotteur agencé dans l'espace interne, le flotteur ayant un volume variable entre une position pliée et une position déployée de ce flotteur.

Selon l'invention, le système de flottaison est remarquable en ce qu'il comporte au moins une interface de fixation munie d'une ferrure, cette ferrure comprenant au moins un organe de fixation pour fixer l'interface de fixation à un premier élément formé par la paroi de fond du conteneur, l'interface de fixation comprenant au moins une ralingue attachée d'une part à la ferrure et d'autre part au flotteur.

De plus, cette ferrure comprend au moins un support principal qui est traversé par une tige principale, la tige principale étant configurée pour traverser une attache du deuxième élément, ce deuxième élément n'appartenant pas à l'interface de fixation et étant distinct de la paroi de fond du conteneur.

Par exemple, le support principal prend la forme d'une première chape à une ou deux joues solidaires d'une plaque de fixation de la ferrure. Le terme « chape » désigne un dispositif mécanique recevant une tige pour former une liaison. Le terme « joue » peut désigner une aile et peut prendre la forme d'une plaque de liaison ou équivalent. La première chape peut alors présenter par exemple une plaque de liaison ou deux plaques de liaison sensiblement parallèles. Le cas échéant, la première chape peut avoir une forme de U en ayant deux plaques de liaison reliées par une base, la base pouvant être un tronçon d'une plaque de fixation. Cette première chape peut alors être fixée à une deuxième chape de l'attache ayant aussi une ou deux joues, la tige principale traversant chaque chape.

Au sein d'un système de flottaison, une telle interface de fixation peut permettre de limiter le nombre de pièces distinctes du système de flottaison. Cette interface de fixation permet notamment de fixer une ou plusieurs ralingues à un conteneur et de fixer le conteneur à une structure porteuse. Les efforts subis par le système de flottaison aussi bien en vol que suite à un amerrissage du véhicule sont alors transmis à la structure porteuse au travers notamment des interfaces de fixation du système de flottaison selon l'invention. L'utilisation d'une interface de fixation formant un moyen de connexion unique attachant le conteneur et au moins une ralingue à la structure porteuse peut permettre d'optimiser ce conteneur et cette structure porteuse. Le conteneur peut éventuellement être simplifié en ne nécessitant pas de nombreux renforts.

Par ailleurs, le terme « ralingue » désigne une bande de matériau souple et déformable mais faiblement élastique en traction. Une telle ralingue peut avantageusement comporter une âme textile revêtue d'au moins une couche d'enduction sur au moins une des faces de l'âme textile.

En outre, une telle âme textile peut être tissée ou non tissée et être formée par des fibres textiles à haute ténacité telles que par exemple des fibres de verre, de carbone, de polyamide ou de polyester. La ou les couches d'enduction sont quant à elles formées par un matériau polymère tel que notamment du polychlorure de vinyle.

Chaque ralingue peut présenter au moins une extrémité repliée ou rabattue sur elle-même de manière à former une boucle permettant une solidarisation de la ralingue avec la ferrure. L'extrémité peut ainsi être soudée, collée ou cousue avec une portion de la ralingue.

Cette interface de fixation peut de plus être fixée au conteneur en usine, chaque ralingue étant fixée à un ou plusieurs flotteurs disposés dans le conteneur. Un système de flottaison comprenant un conteneur ainsi que des interfaces de fixation portant des ralingues reliées à un flotteur peut être livré assemblé dans le but de sa fixation ultérieure au sein d'un véhicule via ces interfaces de fixation. Le montage sur le véhicule et le démontage en dehors du véhicule du système de flottaison sont ainsi facilités en raison du nombre limité d'opérations à effectuer ce qui peut tendre à réduire des coûts d'installation et/ou de maintenance. De plus, les risques de fixation défectueuse d'une ralingue sur le véhicule peuvent être limités puisque les ralingues sont fixées en usine.

Le système de flottaison peut de plus comprendre une ou plusieurs des caractéristiques qui suivent.

Ainsi, ledit au moins un organe de fixation peut comporter un orifice, cet orifice étant percé dans une plaque de fixation de la ferrure portant le support principal.

Par exemple, une plaque de fixation de la ferrure comporte plusieurs orifices et à titre illustratif trois ou quatre orifices de fixation permettant de visser et/ou riveter la ferrure à la paroi de fond du conteneur.

Selon un aspect, la ferrure peut comporter une douille traversant le support principal, la tige principale traversant ladite douille.

Selon un exemple, le support principal comporte une chape mâle ou femelle comprenant deux joues, la douille traversant les deux joues, la tige principale traversant la douille et donc aussi les deux joues.

Une telle douille est notamment intéressante lorsque le support principal est attaché à une ralingue. La ralingue peut alors être solidarisée à la ferrure par la douille même lorsque la tige principale n'est pas en place. Dès lors, lorsqu'un opérateur manœuvre la tige principale pour fixer le support principal à une attache d'un deuxième élément, la ralingue reste fixée à la ferrure par la douille.

En effet, selon un aspect, ladite au moins une ralingue d'une interface de fixation peut comporter au moins une ralingue dite ralingue principale par commodité qui est traversée au moins par ladite tige principale.

Par exemple, la ralingue comporte une sangle ayant une zone extrémale présentant une boucle ou solidaire d'une attache enroulée autour de la tige principale, et le cas échéant d'une douille qui entoure elle-même la tige principale.

Selon un autre exemple, la ralingue comporte une sangle ayant une zone extrémale présentant une boucle ou solidaire d'une attache enroulée uniquement autour de la tige principale.

Selon un aspect, la ferrure peut comporter au moins un support secondaire traversé par une tige secondaire, ladite au moins une ralingue pouvant comporter au moins une ralingue dite ralingue secondaire par commodité qui est traversée au moins par ladite tige secondaire.

Selon la réalisation choisie, l'interface de fixation peut comprendre au moins une ralingue principale et/ou au moins une ralingue secondaire et/ou au moins une ralingue mobile décrite par la suite.

Selon un aspect, la tige principale peut s'étendre selon une direction principale et la tige secondaire peut s'étendre selon une direction secondaire, ladite direction principale et ladite direction secondaire se coupant en un point et étant perpendiculaires entre elles.

En particulier, sur un aéronef la direction principale peut être sensiblement parallèle à l'axe de roulis de l'aéronef et la direction secondaire peut être sensiblement parallèle à l'axe de lacet de l'aéronef, ou inversement. En présence d'une ralingue principale et d'une ralingue secondaire, la ralingue principale peut alors tendre à retenir le flotteur associé selon une direction en élévation sensiblement parallèle à l'axe de lacet et la ralingue secondaire peut tendre à retenir ce flotteur associé selon une direction longitudinale parallèle à l'axe de roulis.

Selon un aspect, l'interface de fixation peut comporter un bras, ledit bras étant traversé par ladite tige principale ou une tige secondaire et étant partiellement libre en rotation autour de ladite tige principale ou secondaire, ledit bras présentant une barre, ladite au moins une ralingue comportant au moins une ralingue dite ralingue mobile par commodité traversée par ladite barre.

L'expression « partiellement libre en rotation » signifie qu'un bras peut effecteur un mouvement rotatif autour d'une tige sur un arc inférieur à 360 degrés.

Le bras peut par exemple être mobile entre une position de repos atteinte lorsque le flotteur associé est plié et une position de travail atteinte lorsque le flotteur associé est déplié.

Un bras représente un balancier ou une bielle pivotante et est articulé par une liaison pivot à la ferrure, par exemple en entourant directement ou indirectement une tige principale ou secondaire. De plus, ce bras porte au moins une ralingue dite ralingue mobile dans la mesure où l'extrémité de la ralingue mobile reliée au bras pivote avec ce bras. En présence d'un flotteur gonflable relié à une ralingue mobile, lorsque le flotteur se gonfle le bras pivote de la position de repos vers la position de travail pour positionner de manière adéquate la ralingue mobile et le flotteur.

Eventuellement, l'interface de fixation peut comporter une sangle de reprise d'efforts, ladite sangle de reprise d'efforts étant attachée au bras, par exemple à ladite barre, et étant configurée pour être attachée au dit deuxième élément.

Par ailleurs, un ressort et/ou une sangle élastique et/ou un lien fusible peut tendre à maintenir le bras dans la position au repos.

De tels équipements d'un tel système de flottaison peuvent former un module optionnel qui peut être aisément fixé à une structure porteuse d'un véhicule.

Par exemple, en partant de la ferrure ladite au moins une ralingue peut traverser une ouverture de la paroi de fond pour rejoindre le flotteur.

Selon un aspect, le revêtement peut comporter au moins un capot mobile par rapport à la paroi de fond ou au moins deux toiles mobiles par rapport à la paroi de fond et reliées l'une à l'autre par un lien qui est configuré pour rompre lorsque le flotteur passe de ladite position pliée à la position dépliée.

De manière générale, tout type de revêtement, connu pour s'ouvrir lorsque le flotteur est déployé, peut être envisageable.

Eventuellement, le système de flottaison peut comporter au moins une bonbonne de gaz reliée par une liaison fluidique au dit au moins un flotteur.

Eventuellement, cette bonbonne peut être distincte du module précédent. La bonbonne peut être fixée sur des cadres montés à demeure sur un véhicule, puis reliée au flotteur lorsque ledit module est fixé à ces cadres.

Par ailleurs, l'invention peut s'appliquer à un véhicule ayant une structure porteuse. Ce véhicule comporte au moins un système de flottaison selon l'invention, ledit deuxième élément à fixer à une interface de fixation appartenant à ladite structure porteuse. Un tel véhicule peut être un aéronef par exemple, et notamment un giravion voire un hélicoptère, une automobile, un navire..

Le véhicule peut comporter une ou plusieurs des caractéristiques qui suivent.

Par exemple, la structure porteuse pouvant comprendre au moins un cadre, le système de flottaison peut comporter au moins une bonbonne de gaz portée par ledit au moins un cadre et reliée au dit au moins un flotteur.

Un tel cadre peut être un cadre existant de la structure porteuse ou encore un cadre intermédiaire optionnel du système de flottaison. Néanmoins, ce cadre intermédiaire peut être monté à demeure sur le véhicule lorsque le véhicule doit pouvoir accueillir le système de flottaison.

Selon une possibilité, la structure porteuse peut comporter au moins un cadre avant ainsi qu'un cadre arrière et un cadre médian, le cadre médian étant disposé longitudinalement entre le cadre avant et le cadre arrière, le cadre avant ainsi que le cadre arrière et le cadre médian étant chacun fixés à une interface de fixation du système de flottaison selon l'invention.

D'autres applications du système de flottaison sont envisageables, et par exemple une utilisation au sein d'un système de mécanisme de fixation de charges diverses.

L'invention et ses avantages apparaîtront avec plus de détails dans le cadre de la description qui suit avec des exemples donnés à titre illustratif en référence aux figures annexées qui représentent :
- les figures 1 à 3, des vues illustrant une interface de fixation ayant une ralingue principale,
- les figures 4 à 6, des vues illustrant une interface de fixation ayant une ralingue secondaire,
- les figures 7 et 8, des vues illustrant une interface de fixation ayant une ralingue principale et une ralingue secondaire,
- la figure 9, une vue d'une interface de fixation ayant une ralingue mobile,
- les figures 10 à 13 des vues illustrant un système de flottaison selon l'invention monté sur un véhicule.

Les éléments présents dans plusieurs figures distinctes sont affectés d'une seule et même référence.

Les figures 1 à 9 illustrent au moins partiellement des interfaces de fixation 1 selon l'invention de diverses sortes.

Indépendamment de la nature de l'interface de fixation 1 et en référence à la figure 1, une interface de fixation 1 selon l'invention comporte une ferrure 10.

Le terme « ferrure 10 » désigne une pièce mécanique, éventuellement d'un seul tenant ou comportant plusieurs sous-ensembles fixés les uns aux autres. Cette pièce mécanique est munie d'organes pour porter au moins une ralingue et pour être attachée à un conteneur contenant un flotteur relié à une telle ralingue et pour être attachée à une structure porteuse d'un véhicule, par exemple une structure porteuse d'un aéronef.

Dès lors, la ferrure 10 inclut au moins un organe de fixation 20 configuré pour fixer l'interface de fixation 1 à un premier élément 5 n'appartenant pas à l'interface de fixation 1, par exemple une paroi d'un conteneur comprenant un flotteur.

Selon un exemple, la ferrure 10 est munie d'une plaque de fixation 15. Le terme « plaque de fixation » est à interpréter au sens large, cette plaque de fixation pouvant être plane ou non plane. Selon l'illustration de la figure 1, la plaque de fixation 15 est sensiblement de forme rectangulaire et plane. Quelle que soit la forme de la plaque de fixation 15, un organe de fixation peut prendre la forme d'un orifice 21 percé dans la plaque de fixation 15. La ferrure peut alors être fixée au premier élément 5 par rivetage ou vissage au travers d'un tel orifice 21. Selon l'illustration de la figure 1, la ferrure comporte quatre orifices 21 à visser ou riveter au premier élément 5.

Un tel organe de fixation permet de désolidariser la ferrure du premier élément de manière non destructive, une telle opération de démontage réversible étant impossible avec une liaison soudée par exemple.

En outre, la ferrure 10 comprend au moins un support principal 25 à fixer à un deuxième élément 6 qui n'appartient pas à l'interface de fixation 1 et est distinct du premier élément 5.

De plus, l'interface de fixation comporte une tige dite « tige principale 35 » par support principal 25. Cette tige principale 35 est configurée pour traverser le support principal et une attache 7 du deuxième élément 6 afin de fixer la ferrure au deuxième élément de manière réversible et non destructive.

La tige principale 35 peut comprendre une broche, au moins un tronçon fileté pouvant être vissé à un écrou ou équivalent, une tête de vis...

Par exemple, un support principal 25 peut comprendre une chape d'interface mâle ou femelle ayant une ou plusieurs joues d'interfaces 26 au moins traversées par une tige principale 35. Chaque joue d'interface 26 peut être solidaire de la plaque de fixation 15. De même, une attache 7 peut comprendre une chape de support mâle ou femelle ayant une ou plusieurs joues de support 71 au moins traversées par la tige principale 35.

La figure 1 illustre une chape d'interface mâle ayant deux joues d'interface 26. De part et d'autre de ces deux joues d'interface 26 se trouvent selon une direction transversale DIR deux joues de support 71 d'une chape de support femelle de l'attache 7. La tige principale 35 traverse alors successivement une première joue de support 71 puis les deux joues d'interface 26 et enfin la dernière joue de support 71. Selon cet exemple, la tige principale 35 comporte une vis 351 munie d'une tête de vis et vissée à un écrou 352.

Par ailleurs, l'interface de fixation 1 comprend au moins une ralingue attachée à la ferrure 10, à savoir retenue par la ferrure. Eventuellement, la plaque de fixation 15 de la ferrure comporte une découpe 16 afin qu'une ralingue passe au travers de cette plaque de fixation 15.

De multiples combinaisons sont possibles. Une ralingue peut ainsi être retenue par une douille, par une tige principale 35 et par exemple via une douille, par une tige secondaire traversant un support secondaire distinct du support principal, ou encore par un bras articulé par une liaison pivot à un support principal voire à un support secondaire.

Diverses réalisations sont illustrées par la suite, les réalisations décrites n'étant pas limitatives.

Ainsi et en référence notamment aux figures 1 et 2, une ferrure 10 peut comporter une douille 30 traversant le support principal 25. La douille 30 peut être traversée de part en part par une tige principale 35.

La figure 3 illustre un exemple de douille 30. Selon cet exemple, la douille 30 comporte deux organes de douille 31, 32 emmanchés l'un dans l'autre et/ou vissés l'un à l'autre. Chaque organe de douille peut prendre la forme d'une structure annulaire. Chaque organe de douille peut comprendre un épaulement 33, un tel épaulement 33 venant en appui contre une joue d'une chape mâle ou femelle ou contre une branche d'un bras le cas échéant pour optimiser la transmission des efforts.

En référence aux figures 1 et 2, une ralingue dite « ralingue principale 60 » peut être traversée par une tige principale 35, et éventuellement par une douille.

Ainsi une douille 30 peut être fixée à demeure sur un support principal 25, une ralingue principale 60 étant retenue par la douille 30. Par exemple, la ralingue principale 60 comporte une sangle entourée autour de la douille 30 ou une sangle solidaire d'un anneau traversé par une douille 30. Lorsque la ferrure est fixée à un deuxième élément 6, la tige principale 35 traverse la douille 30.

Alternativement, une ralingue principale 60 peut être traversée uniquement par une tige principale 35.

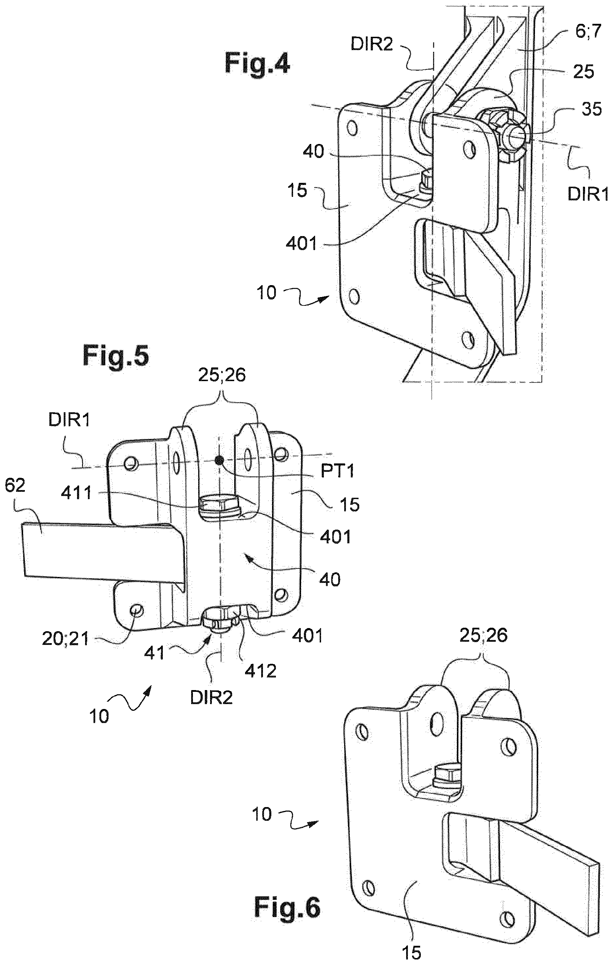

Selon un autre aspect et en référence à titre d'exemples aux figures 4 à 6, outre un support principal 25 fixé à une attache 7 d'un deuxième élément par une tige principale 35, la ferrure 10 comporte au moins un support secondaire 40 traversé par une tige secondaire 45.

Un support secondaire 40 peut comprendre une chape secondaire ayant une ou plusieurs joues secondaires 401 délimitant partiellement un espace vide et au moins traversées par une tige secondaire 45. Selon l'exemple notamment visible sur la figure 5, le support secondaire 40 peut comprendre deux joues secondaires 401 solidaires de la plaque de fixation 15.

Dès lors, une ralingue dite « ralingue secondaire 61 » peut être traversée au moins par ladite tige secondaire 45, et éventuellement par une douille. A titre d'exemple, une tige secondaire 45 peut comporter une vis 411 vissée à un écrou 412.

Par exemple, la ralingue secondaire 61 comporte une sangle traversée par une tige secondaire 45 ou une sangle solidaire d'un anneau traversée par une tige secondaire 45.

Eventuellement, une douille traverse le support secondaire et est traversée par une tige secondaire 45, la douille étant alors interposée entre la tige secondaire 45 et la ralingue secondaire 61.

Eventuellement, la tige principale 35 s'étend selon une direction principale dir1 et la tige secondaire 45 s'étend selon une direction secondaire dir2 perpendiculaire à la direction principale dir1 en un point PT1.

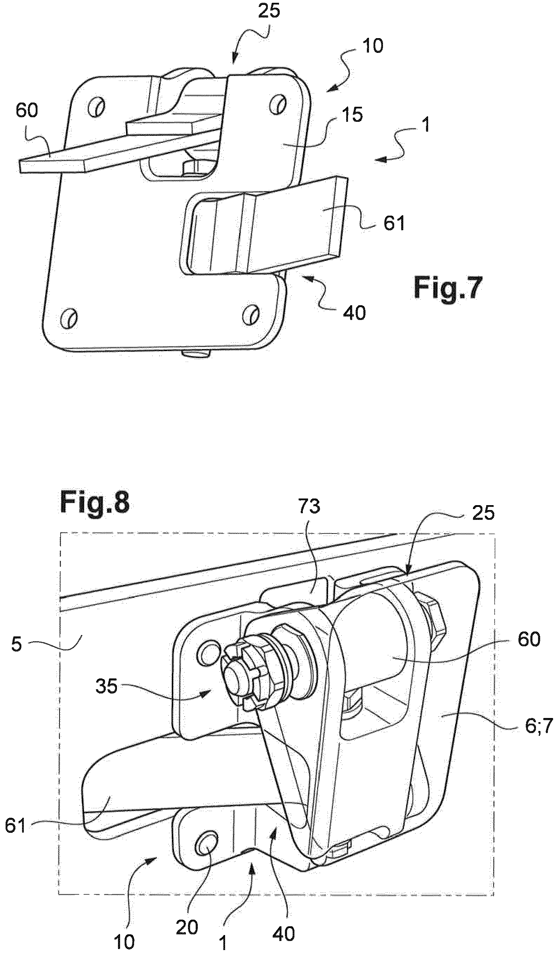

Selon les figures 7 et 8, la ferrure 10 comporte à la fois un support principal 25 portant une ralingue principale 60 et un support secondaire 40 portant une ralingue secondaire 61. La ralingue principale 60 et la ralingue secondaire 61 sont mobiles, par rapport à la ferrure, en rotation autour de deux directions différentes et par exemple orthogonales entre elles.

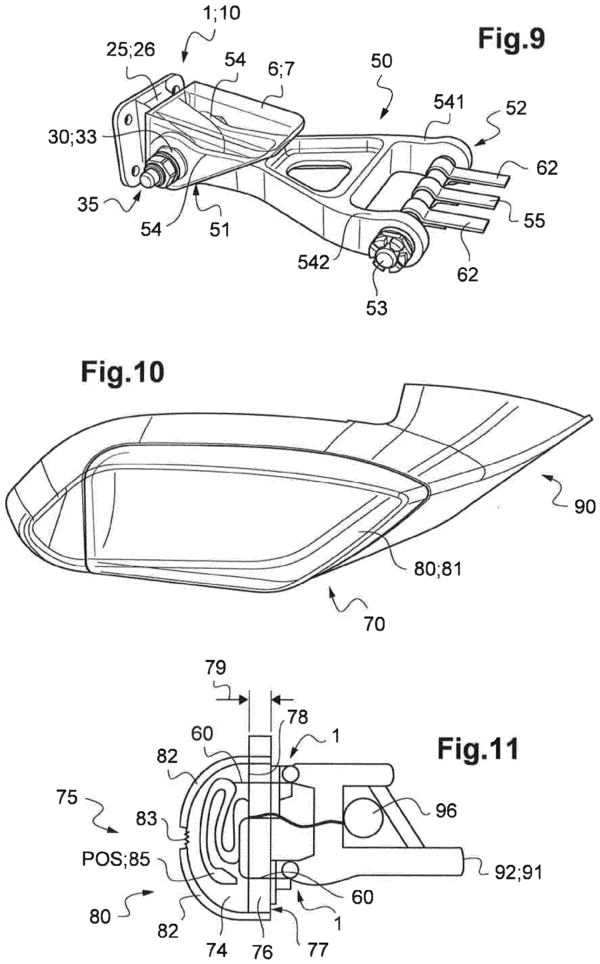

La figure 9 illustre une autre interface de fixation 1. Outre une ferrure comprenant un support principal 25 fixé à une attache 7 d'un deuxième élément par une tige principale 35, l'interface de fixation 1 possède un bras 50 articulé par une liaison pivot à la ferrure et portant au moins une ralingue.

Le bras 50 peut être articulé à un support principal lui même attaché à une attache d'un deuxième élément 6, ou à un support secondaire dépourvu d'un système d'accrochage à une telle attache.

Le bras 50 peut comprendre une ou plusieurs branches traversées par une tige principale 35, voire une douille 30 voire une tige secondaire. Ce bras est libre en rotation autour de ladite tige principale 35 voire de la douille 30 ou de la tige secondaire 45 selon la réalisation.

De plus, le bras 50 est muni d'une barre 53 traversant au moins une ralingue dite « ralingue mobile 62 ». Le terme « barre » désigne un organe permettant de fixer une ralingue au bras. Par exemple, chaque ralingue mobile 62 comporte une sangle traversée par la barre 53 ou une sangle solidaire d'un anneau traversée par la barre 53.

Selon l'exemple de la figure 9, le bras 50 peut s'étendre selon sa longueur d'une extrémité de liaison à articuler à la ferrure jusqu'à une extrémité libre. L'extrémité de liaison peut former une chape munie d'au moins une joue articulée à un support. En particulier, selon la figure 9, l'extrémité de liaison comporte deux joues de liaison 54 traversées par une douille 30. Chaque joue de liaison est agencée latéralement entre un épaulement de la douille 30 et le support principal. La douille 30 est en outre traversée par la tige principale 35. Articuler le bras à une douille permet de garder le bras solidaire de la ferrure position même quand la tige principale n'est pas positionnée.

Alternativement, l'extrémité de liaison peut être articulée à un support secondaire selon une variante non représentée sur une figure.

Par ailleurs, l'extrémité libre peut comprendre deux joues libres 542, 543 qui délimitent entre elles un espace pouvant accueillir chaque ralingue mobile. Les deux joues libre 542 ,543 sont traversées par la barre 53 ou solidarisées à la barre 53 La barre 53 peut comprendre au moins un tronçon fileté pouvant être vissé à un écrou ou équivalent, une tête de vis....

Eventuellement, l'interface de fixation 1 peut comporter une sangle de reprise d'efforts 55 qui est attachée au bras 50 et configurée pour être attachée au dit deuxième élément 6.

Eventuellement, une sangle de rappel et/ou un ressort de rappel et/ou un lien fusible peuvent tendre à maintenir le bras mobile dans la position de repos illustrée sur la figure 9.

Dans ce contexte, les figures 1-2 et 4-9 illustrent à titre d'exemples divers types d'interfaces.

Les figures 1 et 2 montrent une interface de fixation 10 comprenant un unique support principal 25 et dépourvue de support secondaire. Une ralingue principale est ainsi traversée par une douille et une tige principale traverse le support principal 25.

Les figures 4 à 6 montrent une interface de fixation 10 comprenant un unique support principal 25 et un support secondaire 40. Le support principal 25 est fixé à une attache d'un deuxième élément par une tige principale, mais le support principal ne porte par une ralingue. Par contre, une ralingue secondaire 61 est traversée par une tige secondaire 45 traversant un support secondaire 40.

Les figures 7 et 8 présentent une ferrure munie d'un support principal portant une ralingue principale et fixé à une attache d'un deuxième élément, la ferrure ayant de plus un support secondaire portant une ralingue secondaire.

La figure 9 illustre une ferrure portant un balancier portant au moins une ralingue mobile

En référence à la figure 10, une ou plusieurs interfaces de fixation selon l'invention peuvent être agencées au sein d'un système de flottaison 70, par exemple un système de flottaison 70 d'un véhicule 90 et éventuellement d'un aéronef.

La figure 10 illustre partiellement un tel véhicule en se concentrant sur le système de flottaison 70, les autres organes du véhicule pouvant être des organes usuels.

En référence à la figure 11, le système de flottaison 70 comporte un conteneur 75 qui délimite un espace interne 74 dans lequel est agencé au moins un flotteur 85.

Le conteneur 75 inclut une paroi de fond 76 et un revêtement 80 qui délimitent l'espace interne 74. La paroi de fond 76 s'étend selon une direction et notamment selon son épaisseur 79 d'une face arrière 77 à une face avant 78. Autrement dit, l'épaisseur 79 de la paroi de fond est donc à mesurer entre la face avant 78 et la face arrière 77. Par suite, la face avant 78 et le revêtement 80 délimitent entre eux l'espace interne 74 vide dans lequel est disposé au moins un flotteur 85 dans une position pliée. Le flotteur 85 peut par exemple prendre la forme d'une outre gonflable, éventuellement fixée localement à la paroi de fond 76.

De plus, le système de flottaison 70 comporte au moins une interface de fixation 1 selon l'invention. Par exemple, la ferrure de chaque interface de fixation est fixée à la paroi de fond en étant agencée contre sa face arrière 77. De plus, chaque ferrure peut être attachée de manière réversible et non destructive à une structure porteuse 91.

Dès lors, chaque ralingue de chaque interface de fixation est attachée à un flotteur. Par exemple, le flotteur 85 est attaché à des ralingues principales selon l'exemple donné.

Eventuellement, au moins une ralingue traverse une ouverture 73 de la paroi de fond 76 pour rejoindre un flotteur 85.

Par ailleurs, le système de flottaison 70 peut comporter au moins une bonbonne de gaz 96 reliée par une liaison fluidique 87 à au moins un flotteur 85 de type gonflable. La liaison fluidique 87 peut comprendre un ou plusieurs tuyaux, et/ou peut traverser la paroi de fond. Le cas échéant, au moins une bonbonne de gaz 96 peut être portée par au moins un cadre 92, 93, 94 de la structure porteuse.

Des gonfleurs alternatifs, par exemple de type pyrotechnique sont envisageables. Un flotteur déplié mécaniquement est aussi envisageable.

Le gonfleur peut être commandé par un système usuel, par exemple un système comprenant au moins un capteur d'immersion, au moins un bouton d'armement, au moins un bouton de commande de déploiement du flotteur...

Selon un autre aspect, le revêtement 80 peut être mobile par rapport à la paroi de fond pour permettre au flotteur 85 d'être déplié.

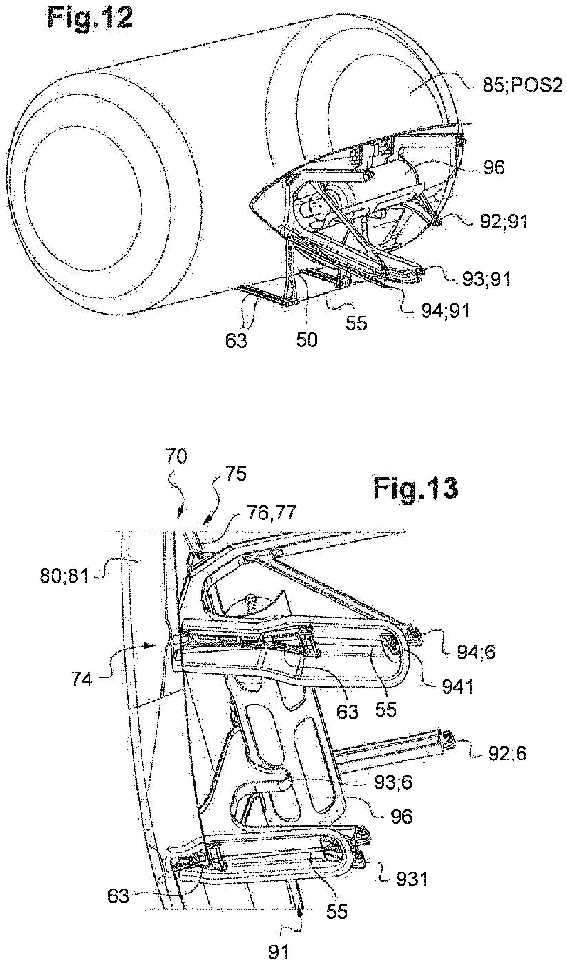

Selon l'exemple de la figure 11, le revêtement 80 peut comprendre au moins deux toiles 82 qui sont chacune mobiles par rapport à la paroi de fond 76, voire fixées à cette paroi de fond 76. De plus, les deux toiles peuvent être reliées l'une à l'autre par un lien 83, tel qu'une corde ou équivalent, configuré pour rompre lorsque le flotteur 85 exerce un effort sur les toiles en passant de sa position pliée à la position dépliée illustrée sur la figure 12.

Selon l'exemple de la figure 13, le revêtement 80 peut comporter un capot 81 mobile par rapport à la paroi de fond 76. Le capot peut être articulé à la paroi de fond, ou encore peut être éjecté par des moyens connus...

Par ailleurs et en référence à la figure 12, le système de flottaison 70 est attaché à une structure porteuse. Cette structure porteuse 91 est munie d'un ou plusieurs deuxièmes éléments 6 fixés respectivement au moins à des interfaces de fixation selon l'invention.

Par exemple, la structure porteuse 91 comprend au moins un cadre à cet effet. Selon l'illustration de la figure 11, la structure porteuse 91 comporte au moins un cadre avant 92 ainsi qu'un cadre arrière 94 et un cadre médian 93, le cadre médian 93 étant disposé longitudinalement entre le cadre avant 92 et le cadre arrière 94. Le cadre avant 92 ainsi que le cadre arrière 94 et le cadre médian 93 sont chacun fixés à au moins une interface de fixation 1 selon l'invention. Les termes « avant » et « arrière » sont à considérer selon le sens d'avancement du véhicule.

Par exemple, le cadre avant 92 est attaché à la paroi de fond 76 par une interface de fixation selon la figure 7 et une interface usuelle, l'interface de fixation selon la figure 7 étant sensiblement agencée au dessus de l'interface usuelle lorsque le véhicule repose sur le sol.

Selon cet exemple, le cadre médian 93 est lui attaché à la paroi de fond 76 par une interface de fixation selon la figure 4 et une première interface de fixation selon la figure 9, l'interface de fixation selon la figure 4 étant sensiblement agencée au dessus de la première interface de fixation selon la figure 9 lorsque le véhicule repose sur le sol. Le cas échéant une sangle de reprise d'efforts 55 de la première interface de fixation est en outre attachée à une fixation 931 du cadre médian 93 visible sur la figure 12.

Selon cet exemple, le cadre arrière 94 est lui attaché à la paroi de fond 76 par une interface de fixation selon la figure 2 et une deuxième interface de fixation selon la figure 9, l'interface de fixation selon la figure 24 étant sensiblement agencée au dessus de la deuxième interface de fixation selon la figure 9 lorsque le véhicule repose sur le sol. Le cas échéant une sangle de reprise d'efforts de la deuxième interface de fixation est en outre attachée à une fixation 941 du cadre arrière 94 visible sur la figure 12.

## Revendications

1. Système de flottaison (70) comprenant un conteneur (75), ledit conteneur (75) étant pourvu d'une paroi de fond (76) et d'un revêtement (80), la paroi de fond (76) s'étendant selon une direction d'une face arrière (77) à une face avant (78), la face avant (78) et le revêtement (80) délimitant entre eux un espace interne (74) vide du conteneur (75), le système de flottaison (70) comprenant au moins un flotteur (85) agencé dans ledit espace interne (74), ledit flotteur (85) ayant un volume variable entre une position pliée (POS1) et une position déployée (POS2) de ce flotteur,
**caractérisé en ce que** ledit système de flottaison (70) comporte au moins une interface de fixation (1) munie d'une ferrure (10), ladite ferrure (10) comprenant au moins un organe de fixation (20) pour fixer l'interface de fixation (1) à un premier élément (5) formé par ladite paroi de fond (76) dudit conteneur (75), ladite interface de fixation (1) comprenant au moins une ralingue (60, 61, 62) attachée d'une part à ladite ferrure (10) et d'autre part audit flotteur (85), ladite ferrure (10) comprenant au moins un support principal (25) traversé par une tige principale (35), ladite tige principale (35) étant configurée pour traverser une attache (7) d'un deuxième élément (6), ce deuxième élément (6) n'appartenant pas à l'interface de fixation (1) et étant distinct de ladite paroi de fond (76) dudit conteneur (75).

2. Système de flottaison selon la revendication 1,
**caractérisée en ce que** ledit au moins un organe de fixation (20) comporte un orifice (21), ledit orifice (21) étant percé dans une plaque de fixation (15) de ladite ferrure (10) portant ledit au moins un support principal (25).

3. Système de flottaison selon l'une quelconque des revendications 1 à 2,
**caractérisée en ce que** ladite ferrure (10) comporte une douille (30) traversant ledit support principal (25), ladite tige principale (35) traversant ladite douille (30).

4. Système de flottaison selon l'une quelconque des revendications 1 à 3,
**caractérisée en ce que** ladite au moins une ralingue comporte une ralingue principale (60) traversée au moins par ladite tige principale (35).

5. Système de flottaison selon l'une quelconque des revendications 1 à 4,
**caractérisée en ce que** ladite ferrure (10) comporte au moins un support secondaire (40) qui est traversé par une tige secondaire (45), ladite au moins une ralingue comportant une ralingue secondaire (61) traversée au moins par ladite tige secondaire (45).

6. Système de flottaison selon la revendication 5,
**caractérisée en ce que** ladite tige principale (35) s'étend selon une direction principale (dir1) et ladite tige secondaire (45) s'étend selon une direction secondaire (dir2), ladite direction principale (dir1) et ladite direction secondaire (dir2) se coupant en un point et étant perpendiculaires entre elles.

7. Système de flottaison selon l'une quelconque des revendications 1 à 6,
**caractérisée en ce que** ladite interface de fixation (1) comporte un bras (50), ledit bras (50) étant traversé par ladite tige principale (35) ou une tige secondaire (45) et étant partiellement libre en rotation autour de ladite tige principale (35) ou de ladite tige secondaire (45), ledit bras (50) présentant une barre (53), ladite au moins une ralingue comportant au moins une ralingue mobile (62) traversée par ladite barre (53).

8. Système de flottaison selon la revendication 7,
**caractérisée en ce que** ladite interface de fixation (1) comporte une sangle de reprise d'efforts (55), ladite sangle de reprise d'efforts (55) étant attachée au bras (50) et étant configurée pour être attachée au dit deuxième élément (6).

9. Système de flottaison l'une quelconque des revendications 1 à 8,
**caractérisé en ce qu'**en partant de la ferrure (10) ladite au moins une ralingue (60, 61, 62) traverse une ouverture (73) de la paroi de fond (76) pour rejoindre ledit flotteur (85).

10. Système de flottaison selon l'une quelconque des revendications 1 à 9,
**caractérisé en ce que** ledit revêtement (80) comporte au moins un capot (81) mobile par rapport à la paroi de fond (76) ou au moins deux toiles (82) mobiles par rapport à la paroi de fond (76) et reliées l'une à l'autre par un lien (83) qui est configuré pour rompre lorsque le flotteur (85) passe de ladite position pliée à la position dépliée.

11. Système de flottaison selon l'une quelconque des revendications 1 à 10,
**caractérisé en ce que** ledit système de flottaison (70) comporte au moins une bonbonne de gaz (96) reliée par une liaison fluidique (87) au dit au moins un flotteur (85).

12. Véhicule (90) ayant une structure porteuse (91),
**caractérisé en ce que** ledit véhicule (90) comporte au moins un système de flottaison (70) selon l'une quelconque des revendications 1 à 11, ledit deuxième élément (6) appartenant à ladite structure porteuse (91).

13. Véhicule selon la revendication 12,
**caractérisé en ce que** ladite structure porteuse (91) comprenant au moins un cadre (92, 93, 94), ledit système de flottaison (70) comporte au moins une bonbonne de gaz (96) portée par ledit au moins un cadre (92, 93, 94) et reliée au dit au moins un flotteur (85).

14. Véhicule selon l'une quelconque des revendications 12 à 13,
**caractérisé en ce que** ladite structure porteuse (91) comporte au moins un cadre avant (92) ainsi qu'un cadre arrière (94) et un cadre médian (93), le cadre médian (93) étant disposé longitudinalement entre le cadre avant (92) et le cadre arrière (92), le cadre avant (92) ainsi que le cadre arrière (94) et le cadre médian (93) étant chacun fixés à ladite interface de fixation (1) dudit système de flottaison (70).

## Patentansprüche

1. Schwimmsystem (70) mit einem Behälter (75), wobei der Behälter (75) eine Bodenwand (76) und eine Hülle (80) aufweist, wobei sich die Bodenwand (76) in einer Richtung von einer Rückseite (77) zu einer Vorderseite (78) erstreckt, wobei die Vorderseite (78) und die Hülle (80) zwischen sich einen leeren Innenraum (74) des Behälters (75) begrenzen, wobei das Schwimmsystem (70) mindestens einen Schwimmer (85) umfasst, der in dem Innenraum (74) angeordnet ist, wobei der Schwimmer (85) ein zwischen einer zusammengefalteten Position (POS1) und einer entfalteten Position (POS2) veränderbares Volumen aufweist,
**dadurch gekennzeichnet, dass** das Schwimmsystem (70) mindestens eine Befestigungsschnittstelle (1) umfasst, die mit einem Anschlussstück (10) versehen ist, wobei das Anschlussstück (10) mindestens ein Befestigungselement (20) zur Befestigung der Befestigungsschnittstelle (1) an einem ersten Element (5) umfasst, das von der Bodenwand (76) des Behälters (75) gebildet ist, wobei die Befestigungsschnittstelle (1) mindestens ein Fall (60, 61, 62) umfasst, das einerseits an dem Anschlussstück (10) und andererseits an dem Schwimmer (85) befestigt ist, wobei das Anschlussstück (10) mindestens einen Hauptträger (25) umfasst, der von einer Hauptstange (35) durchquert wird, wobei die Hauptstange (35) konfiguriert ist, um eine Befestigung (7) eines zweiten Elements (6) zu durchqueren, wobei dieses zweite Element (6) nicht zu der Befestigungsschnittstelle (1) gehört und von der Bodenwand (76) des Behälters (75) verschieden ist.

2. Schwimmsystem nach Anspruch 1,
**dadurch gekennzeichnet, dass** das mindestens eine Befestigungselement (20) eine Öffnung (21) aufweist, wobei die Öffnung (21) in eine Befestigungsplatte (15) des Anschlussstücks (10) gebohrt ist, die den mindestens einen Hauptträger (25) trägt.

3. Schwimmsystem nach einem der Ansprüche 1 bis 2,
**dadurch gekennzeichnet, dass** das Anschlussstück (10) eine Buchse (30) aufweist, die durch den Hauptträger (25) hindurchgeht, wobei die Hauptstange (35) durch die Buchse (30) hindurchgeht.

4. Schwimmsystem nach einem der Ansprüche 1 bis 3,
**dadurch gekennzeichnet, dass** das mindestens eine Fall ein Hauptfall (60) umfasst, durch das mindestens die Hauptstange (35) verläuft.

5. Schwimmsystem nach einem der Ansprüche 1 bis 4,
**dadurch gekennzeichnet, dass** das Anschlussstück (10) mindestens einen sekundären Träger (40) umfasst, der von einer sekundären Stange (45) durchquert wird, wobei das mindestens eine Fall ein sekundäres Fall (61) umfasst, das mindestens von der sekundären Stange (45) durchquert wird.

6. Schwimmsystem nach Anspruch 5,
**dadurch gekennzeichnet, dass** sich die Hauptstange (35) in einer Hauptrichtung (dir1) erstreckt und die Sekundärstange (45) sich in einer Sekundärrichtung (dir2) erstreckt, wobei sich die Hauptrichtung (dir1) und die Sekundärrichtung (dir2) in einem Punkt schneiden und senkrecht zueinander sind.

7. Schwimmsystem nach einem der Ansprüche 1 bis 6,
**dadurch gekennzeichnet, dass** die Befestigungsschnittstelle (1) einen Arm (50) umfasst, wobei der Arm (50) von der Hauptstange (35) oder einer Sekundärstange (45) durchquert wird und teilweise frei um die Hauptstange (35) oder die Sekundärstange (45) drehbar ist, wobei der Arm (50) einen Stab (53) umfasst, wobei das mindestens eine Fall mindestens ein bewegliches Fall (62) umfasst, das von dem Stab (53) durchquert wird.

8. Schwimmsystem nach Anspruch 7,
**dadurch gekennzeichnet, dass** die Befestigungsschnittstelle (1) einen lastaufnehmenden Gurt (55) umfasst, wobei der lastaufnehmende Gurt (55) an dem Arm (50) befestigt ist und konfiguriert ist, um an dem zweiten Element (6) befestigt zu werden.

9. Schwimmsystem nach einem der Ansprüche 1 bis 8,
**dadurch gekennzeichnet, dass** ausgehend von dem Anschlussstück (10) das mindestens eine Fall (60, 61, 62) durch eine Öffnung (73) in der Bodenwand (76) verläuft, um sich mit dem Schwimmer (85) zu verbinden.

10. Schwimmsystem nach einem der Ansprüche 1 bis 9,
**dadurch gekennzeichnet, dass** die Hülle (80) mindestens eine relativ zur Bodenwand (76) bewegliche Abdeckung (81) oder mindestens zwei relativ zur Bodenwand (76) bewegliche Bahnen (82) umfasst, die durch ein Verbindungsglied (83) miteinander verbunden sind, das konfiguriert ist, um zu brechen, wenn sich der Schwimmer (85) von der zusammengefalteten Position in die entfaltete Position bewegt.

11. Schwimmsystem nach einem der Ansprüche 1 bis 10,
**dadurch gekennzeichnet, dass** das Schwimmsystem (70) mindestens einen Gaszylinder (96) umfasst, der durch eine Fluidverbindung (87) mit dem mindestens einen Schwimmer (85) verbunden ist.

12. Fahrzeug (90) mit einer Tragstruktur (91),
**dadurch gekennzeichnet, dass** das Fahrzeug (90) mindestens ein Schwimmsystem (70) nach einem der Ansprüche 1 bis 11 umfasst, und dass das zweite Element (6) zu der Tragstruktur (91) gehört.

13. Fahrzeug nach Anspruch 12,
**dadurch gekennzeichnet, dass** die Tragstruktur (91) mindestens einen Rahmen (92, 93, 94) umfasst, wobei das Schwimmsystem (70) mindestens einen Gaszylinder (96) umfasst, der von dem mindestens einen Rahmen (92, 93, 94) getragen wird und mit dem mindestens einen Schwimmer (85) verbunden ist.

14. Fahrzeug nach einem der Ansprüche 12 bis 13,
**dadurch gekennzeichnet, dass** die Tragstruktur (91) mindestens einen vorderen Rahmen (92) sowie einen hinteren Rahmen (94) und einen mittleren Rahmen (93) umfasst, wobei der mittlere Rahmen (93) in Längsrichtung zwischen dem vorderen Rahmen (92) und dem hinteren Rahmen (92) angeordnet ist,
und dass sowohl der vordere Rahmen (92) als auch der hintere Rahmen (94) und der mittlere Rahmen (93) jeweils an der Befestigungsschnittstelle (1) des Schwimmsystems (70) befestigt sind.

## Claims

1. Flotation system (70) including a container (75), said container (75) being provided with a bottom wall (76) and a covering (80), the bottom wall (76) extending in a direction from a rear face (77) to a front face (78), the front face (78) and the covering (80) delimiting therebetween an empty internal space (74) of the container (75), the flotation system (70) including at least one float (85) arranged in said internal space (74), said float (85) having a variable volume between a folded position (POS1) and a deployed position (POS2) of said float,
**characterised in that** said flotation system (70) comprises at least one securing interface (1) provided with a fitting (10), said fitting (10) including at least one securing member (20) for securing the securing interface (1) to a first element (5) formed by said bottom wall (76) of said container (75), said securing interface (1) including at least one band (60, 61, 62) which is attached to said fitting (10) and to said float (85), said fitting (10) including at least one main support (25) through which a main rod (35) passes, said main rod (35) being designed to pass through an attachment (7) of a second element (6), said second element (6) not belonging to the securing interface (1) and being separate from said bottom wall (76) of said container (75).

2. Flotation system according to claim 1, **characterised in that** said at least one securing member (20) comprises a hole (21), said hole (21) being drilled in a securing plate (15) of said fitting (10) supporting said at least one main support (25).

3. Flotation system according to either claim 1 or claim 2, **characterised in that** said fitting (10) comprises a sleeve (30) that passes through said main support (25), said main rod (35) passing through said sleeve (30).

4. Flotation system according to any of claims 1 to 3, **characterised in that** said at least one band comprises a main band (60) through which at least said main rod (35) passes.

5. Flotation system according to any of claims 1 to 4, **characterised in that** said fitting (10) comprises at least one secondary support (40) through which a secondary rod (45) passes, said at least one band comprising a secondary band (61) through which at least said secondary rod (45) passes.

6. Flotation system according to claim 5, **characterised in that** said main rod (35) extends in a main direction (dir1) and said secondary rod (45) extends in a secondary direction (dir2), said main direction (dir1) and said secondary direction (dir2) intersecting at one point and being perpendicular to one other.

7. Flotation system according to any of claims 1 to 6, **characterised in that** said securing interface (1) comprises an arm (50), said main rod (35) or a secondary rod (45) passing through said arm (50) and said arm being partly free to rotate about said main rod (35) or said secondary rod (45), said arm (50) having a bar (53), said at least one band comprising at least one movable band (62) through which said bar (53) passes.

8. Flotation system according to claim 7, **characterised in that** said securing interface (1) comprises a load take-up strap (55), said load take-up strap (55) being attached to the arm (50) and being designed to be attached to said second element (6).

9. Flotation system according to any of claims 1 to 8, **characterised in that**, starting from the fitting (10), said at least one band (60, 61, 62) passes through an opening (73) in the bottom wall (76) in order to join said float (85).

10. Flotation system according to any of claims 1 to 9, **characterised in that** said covering (80) comprises at least one cap (81) that is movable relative to the bottom wall (76) or at least two pieces of cloth (82) that are movable relative to the bottom wall (76) and interconnected by a link (83) which is designed to break when the float (85) passes from said folded position to the unfolded position.

11. Flotation system according to any of claims 1 to 10, **characterised in that** said flotation system (70) comprises at least one gas cylinder (96) connected by a fluidic connection (87) to said at least one float (85).

12. Vehicle (90) having a supporting structure (91), **characterised in that** said vehicle (90) comprises at least one flotation system (70) according to any of claims 1 to 11, said second element (6) belonging to said supporting structure (91).

13. Vehicle according to claim 12, **characterised in that**, said supporting structure (91) including at least one frame (92, 93, 94), said flotation system (70) comprises at least one gas cylinder (96) which is supported by said at least one frame (92, 93, 94) and connected to said at least one float (85).

14. Vehicle according to either claim 12 or claim 13, **characterised in that** said supporting structure (91) comprises at least one front frame (92) as well as a rear frame (94) and a middle frame (93), the middle frame (93) being arranged longitudinally between the front frame (92) and the rear frame (92), the front frame (92) as well as the rear frame (94) and the middle frame (93) each being secured to said securing interface (1) of said flotation system (70).
